(19) Europäisches Patentamt
European Patent Office
Office européen des brevets

(11) Numéro de publication : 0 381 907 B1

(12) # FASCICULE DE BREVET EUROPEEN

(45) Date de publication du fascicule du brevet : **07.04.93 Bulletin 93/14**

(51) Int. Cl.$^5$ : **A01N 43/42**

(21) Numéro de dépôt : **89420452.8**

(22) Date de dépôt : **20.11.89**

(54) **Produit herbicide, son utilisation et procédé pour la lutte sélective contre les mauvaises herbes dans les cultures de riz et de céréales.**

(30) Priorité : **22.11.88 FR 8815626**

(43) Date de publication de la demande : **16.08.90 Bulletin 90/33**

(45) Mention de la délivrance du brevet : **07.04.93 Bulletin 93/14**

(84) Etats contractants désignés : **BE DE ES FR GB GR IT NL**

(56) Documents cités :
**EP-A- 0 053 011**
**EP-A- 0 148 445**
**US-A- 4 270 946**

(73) Titulaire : **RHONE-POULENC AGROCHIMIE**
**14-20, rue Pierre Baizet**
**F-69009 Lyon (FR)**

(72) Inventeur : **Rognon, Jacques**
**31 Rue de Lattre de Tassigny**
**F-69009 Lyon (FR)**

(74) Mandataire : **Brachotte, Charles et al**
**RHONE-POULENC AGROCHIMIE DPI BP 9163**
**F-69263 Lyon Cedex 09 (FR)**



Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un produit herbicide contenant une association de matières actives herbicides et convenant de façon remarquable au contrôle sélectif des mauvaises herbes dans les cultures de riz et de céréales. L'invention concerne également l'utilisation du nouveau produit, éventuellement sous forme de composition, à titre d'herbicide et un procédé pour contrôler les mauvaises herbes dans les cultures de riz et de céréales à l'aide du produit ou de la composition.

### Art antérieur

Le N-(2,4-difluorophenyl)-2-(3-trifluoromethyl phenoxy) nicotinamide dont le nom agrochimique est diflufenican est un herbicide sélectif de pré ou de post levée décrit notamment dans US 4,618,366.

On connait également par US 4,270,946 d'autres N-(phenyl ou benzyl susbtitué) 2-(3-substitué phenoxy) nicotinamides également utilisables en application de pré ou de post levée.

Il est, par ailleurs, décrit dans DE-A-3108873 des dérivés 3,(5,6 ou 7)-dichloro 8-acyl quinoline comme herbicides sélectifs utilisables en pré ou post levée. Parmi ces composés on peut citer, notamment, le 3,7 dichloro quinoline 8-carboxylic acide dont le nom de code agrochimique est BAS 514 (cf : 1985 British crop conference-weeds pages 77-83).

### Objet de l'invention

Il est néanmoins toujours souhaitable d'améliorer l'action des matières actives herbicides.

Il a été trouvé ainsi de manière parfaitement inattendue que l'action combinée des nicotinamides mentionnés précédemment et d'un dérivé de 3,(5,6 ou 7)-dichloro 8-acyl quinoline améliorait de façon notable et surprenante l'action respective et isolée des deux matières actives pour un certain nombre d'adventices particulièremnt nuisibles dans les cultures, notamment de riz et de céréales. Cela, tout en conservant la sélectivité vis à vis des cultures. Il en découle donc une amélioration du spectre d'activité et une possiblitié de diminuer la dose respective de chaque matière active utilisée, cette dernière qualité étant particulièrement importante pour des raisons écologiques aisement compréhensibles.

En particulier, l'association objet de la présente invention s'est révélée spécialement efficace pour controler Galium aparine, Echinochloa crusgalli et Heteranthera callifolia.

### Exposé général de l'invention

L'invention concerne donc en premier lieu un produit herbicide contenant une association d'au moins une matière active qui est un dérivé de N-(phenyl ou benzyl subtitué) 2-(3-substitué phénoxy) nicotinamide de formule (I) indiquée en annexe de la description dans laquelle :

R est H ou $CH_3$,

X est un atome d'halogène (Cl, I, F, Br), ou un groupe $C_1$-$C_3$ alkyl ou trifluoromethyl ou carboethoxy,

Y est un atome d'hydrogène, un groupe $C_1$-$C_4$ alkyle, $C_1$-$C_4$ haloalkyle, $C_1$-$C_4$ thio (haloalkyle), $C_1$-$C_4$ alkoxy, nitro, cyano, un atome d'halogène (Cl, I, F, Br),

Z a l'une des significations de Y

n= 0, 1

et au moins une matière active qui est un dérivé 3,(5,6 ou 7)-dichloro 8-acyl quinoline de formule (II) indiquée en fin de description dans laquelle :

$Y_1$ est un atome d'oxygène, de souffre, un groupe NOH, 2H, 2Cl ou un groupe N-A-B dans lequel A est $CH_2$ ou une simple liaison covalente, B est phényl ou pyridyl éventuellement substitué par Cl, $NO_2$, $CH_3$, $CF_3$ ou $OCH_3$,

$R_1$ est un atome d'halogène, un groupe cyano, $NR_2R_3$ dans lequel $R_2$, $R_3$ sont indépendamment un atome d'hydrogène, un groupe $C_1$-$C_6$ alkyle, $C_1$-$C_6$ alcényle, $C_1$-$C_6$ hydroxyalkyle, formyle, cyclohexyle, phenyle ou pyridyle ou $R_2$, $R_3$ ensemble forment un groupe tetra ou pentaméthylene dans lequel un groupe $CH_2$ peut être remplacé par un atome d'oxygène, d'azote ou N-$CH_3$, $R_1$ peut être encore un groupe OM dans lequel M est un atome d'hydrogène, un métal du groupe 1 ou 2, un groupe $C_1$-$C_8$ alkyl, $H_2N(R_2)(R_3)$ ou phényle éventuellement substitué par un atome d'halogène, un groupe $NO_2$, $C_1$-$C_4$ alkyl ou trihalométhyl ou Y et $R_1$ ensemble peuvent représenter le groupement cyano.

Les matières actives de formule (I) et (II) peuvent être présentes en des quantités variables. Généralement le rapport en poids (I) : (II) sera compris entre 1/1000 et 100, de préférence 1/100 et 10.

Les associations sont le plus souvent de type binaire (une seule matière active de formule (I) et une seule

matière active de formule (II)) mais on peut envisager quelquefois des associations ternaires ou quaternaires avec un ou plusieurs autres pesticides compatibles et/ou avec plusieurs matières actives de formule (I) et plusieurs matières actives de formule (II).

Mode d'exécution préféré

Parmi les composés de formule (I) on préfèrera ceux de la revendication 14 et en particulier le diflufenican ou N-(2,4-difluorophenyl) 2-(3-trifluoromethylphenoxy) nicotinamide ou le N-(phényl)-2-(3-trifluorométhylphénoxy) nicotinamide.

Parmi les composés de formule (II) on préfèrera ceux de la revendication 16 et en particulier le BAS 514 ou 3,7-dichloroquinoline 8-carboxylic acide.

Un produit particulièrement préféré comprend l'association de N-(2,4-difluorophenyl) 2-(3-trifluoromethylphenoxy) nicotinamide et3,7-dichloroquinoline 8-carboxylic acide. Ce produit peut contenir les matières actives selon les rapports indiqués précédemment. Toutefois, avantageusement, le rapport en poids N-(2,4-difluorophenyl) 2-(3-trifluoromethylphenoxy) nicotinamide : 3,7-dichloroquinoline 8-carboxylic acide sera compris entre 1/50 et 2.

Utilisation

Ces produits selon l'invention sont destinés à une utilisation simultanée, séparée ou étalée dans le temps pour le traitement herbicide des végétaux indésirables, notamment contre les adventices présentes dans les cultures de riz et de céréales.

Dans le cas d'une utilisation simultanée (qui est préférée), il est avantageux d'utiliser des produits prêts à l'emploi contenant l'association des matières actives décrites plus haut. On peut également utiliser des produits préparés juste avant l'emploi, par mélange extemporanné des matières actives ou des compositions contenant chacune des matières actives comme elles sont décrites ci-après. L'utilisation peut également être espacée dans le temps. On peut également utiliser le produit en traitant les cultures à protéger successivement par l'une puis l'autre des composés de formule (I) et (II) de manière à former in situ sur la plante le produit selon l'invention.

Ces produits sont préparés par simple mélange des matières actives.

L'invention a conséquemment et également pour objet l'utilisation à titre d'herbicide des produits tels qu'ils viennent d'être décrits, notamment pour les adventices présentes dans les cultures de riz ou de céréales.

L'utilisation des produits selon l'invention s'effectue la plupart du temps sous forme de composition herbicide comportant un ou plusieurs supports acceptables en agriculture et/ou un ou plusieurs agents tensio actifs.

En effet, pour leur emploi pratique, les associations selon l'invention sont rarement utilisées seules. Le plus souvent ces associations font partie de compositions. Ces compositions, utilisables comme agents herbicides, contiennent comme matière active une association selon l'invention tel que décrit précédemment, en mélange avec des supports solides ou liquides acceptables en agriculture et les agents tensio-actifs également acceptables en agriculture. En particulier sont utilisables les supports inertes et usuels et les agents tensioactifs usuels. Ces compositions font également partie de l'invention.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, etc... . Plus généralement les associations utilisées dans l'invention peuvent être combinées à tous les additifs solides ou liquides correspondant aux techniques habituelles de la mise en formulation.

D'une façon générale, les compositions selon l'invention contiennent habituellement de 0,05 à 95 % environ (en poids) d'une association selon l'invention.

Par le terme "support", dans le présent exposé, on désigne une matière organique ou minérale, naturelle ou synthétique, avec laquelle l'association est combinée pour faciliter son application sur la plante. Ce support est donc généralement inerte et il doit être acceptable en agriculture, notamment sur la plante traitée. Le support est solide (argiles, silicates naturels ou synthétiques, silice, résines, cires, engrais solides, etc...) ou liquide (solvant).

L'agent tensioactif peut être un agent émulsionnant, dispersant ou mouillant de type ionique ou non ionique ou un mélange de tels agents tensioactifs. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des

dérivés de la taurine (notamment des alkyltaurates), des esters phosphoriques d'alcools ou de phénols polyoxyéthylés, des esters d'acides gras et de polyols, les dérivés à fonction sulfates, sulfonates et phosphates des composés précédents.

La présence d'au moins un agent tensioactif est généralement indispensable lorsque l'un des deux composés au moins de l'association et/ou le support inerte ne sont pas solubles dans l'eau et que l'agent vecteur de l'application est l'eau.

Pour leur application, les associations selon l'invention se trouvent donc généralement sous la forme de compositions; ces compositions selon l'invention sont elles-mêmes sous des formes assez diverses, solides ou liquides.

Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudres à pulvériser), les pates.

Les poudres mouillables (ou poudre à pulvériser) sont habituellement préparées de manière qu'elles contiennent 20 à 95 % d'association, et elles contiennent habituellement, en plus du support solide, de 0 à 5 % d'un agent mouillant, de 3 à 10 % d'un agent dispersant, et, quant c'est nécessaire, de 0 à 10 % d'un ou plusieurs stabilisants et/ou autres additifs, comme des agents de pénétration, des adhésifs, ou des agents antimottants, colorants, etc..

A titre d'exemple, voici diverses compositions de poudres mouillables:

Exemple:

| | |
|---|---|
| - association | 50 % |
| - lignosulfonate de calcium (défloculant) | 5 % |
| - isopropylnaphtalène sulfonate (agent mouillant anionique) | 1 % |
| - silice antimottante | 5 % |
| - kaolin (charge) | 39 % |

Exemple:

| | |
|---|---|
| - association | 80 % |
| - alkylnaphtalène sulfonate de sodium | 2 % |
| - lignosulfonate de sodium | 2 % |
| - silice antimottante | 3 % |
| - kaolin | 13 % |

Exemple:

| | |
|---|---|
| - association | 50 % |
| - alkylnaphtalène sulfonate de sodium | 2 % |
| - méthyl cellulose de faible viscosité | 2 % |
| - terre de diatomées | 46 % |

Exemple:

| | |
|---|---|
| - association | 400 g |
| - lignosulfonate de sodium | 50 g |
| - dibutylnaphtalène sulfonate de sodium | 10 g |
| - silice | 540 g |

Exemple:

| | |
|---|---|
| - association | 250 g |
| - isooctylphénoxy-polyoxyéthylène-éthanol | 25 g |
| - mélange équipondéral de craie de Champagne et d'hydroxyéthylcellulose | 17 g |
| aluminosilicate de sodium | 543 g |
| - kieselguhr | 165 g |

Exemple:

| | |
|---|---|
| - association | 100 g |
| - mélange de sels de sodium de sulfates d'acides gras saturés | 30 g |
| - produit de condensation d'acide naphtalène sulfonique et de formaldéhyde | 50 g |
| - kaolin | 820 g |

Pour obtenir ces poudres à pulvériser ou poudres mouillables, on mélange intimement les matières actives dans des mélangeurs appropriés avec les substances additionnelles ou on imprègne l'un ou l'autre ou les deux composés de l'association sur la charge poreuse et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée.

A la place des poudres mouillables, on peut réaliser des pâtes. Les conditions et modalités de réalisation et d'utilisation de ces pâtes sont semblables à celles des poudres mouillables ou poudres à pulvériser.

Les concentrés émulsionnables ou solubles comprennent le plus souvent 10 à 80 % de matière active et un solvant.

En plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précedemment cités.

A titre d'exemple, voici la composition de quelques concentrés émulsionnables:

Exemple:

| | |
|---|---|
| - association | 400 g/l |
| - dodécylbenzène sulfonate alcalin | 24 g/l |
| - nonylphénol oxyéthylé à 10 molécules d'oxyde d'éthylène | 16 g/l |
| - cyclohexanone | 200 g/l |
| - solvant aromatique q.s.p | 1 litre |

Selon une autre formule de concentré émulsionnable, on utilise :

Exemple:

| | |
|---|---|
| - association | 250 g |
| - huile végétale époxydée | 25 g |
| - mélange de sulfonate d'alcoylaryle et d'éther de polyglycol et d'alcools gras | 100 g |
| - diméthylformamide | 50 g |
| - xylène | 575 g |

A partir de ces concentrés, on peut obtenir par dilution avec de l'eau des émulsions de toute concentration désirée, qui conviennent particulièrement à l'application sur les feuilles.

Les suspensions concentrées, qui sont applicables en pulvérisation, sont préparées de manière à obtenir un produit fluide stable ne se déposant pas (broyage fin) et elles contiennent habituellement de 10 à 75 % d'association, de 0,5 à 15 % d'agents tensioactifs, de 0,1 à 10 % d'agents thixotropes, de 0 à 10 % d'additifs appropriés, comme des anti-mousses, des inhibiteurs de corrosion, des stabilisants, des agents de pénétration et des adhésifs et, comme support, de l'eau ou un liquide organique dans lequel la matière active est peu soluble ou non soluble. Certaines matières solides organiques ou des sels minéraux peuvent être dissous dans le support pour aider à empêcher la sédimentation ou comme antigels pour l'eau.

A titre d'exemple, voici une composition de suspension concentrée :

Exemple :

| | |
|---|---|
| - association | 500 g |
| - phosphate de tristyrylphénol polyéthoxylé | 50 g |
| - alkylphénol polyéthoxylé | 50 g |
| - polycarboxylate de sodium | 20 g |
| - éthylène glycol | 50 g |
| - huile organopolysiloxanique (antimousse) | 1 g |
| - polysaccharide | 1,5 g |
| - eau | 316,5 g |

Comme cela a déja été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une mayonnaise.

Pour une application à très bas volume (ULV), avec une pulvérisation en trés fines gouttelettes, on prépare des solutions des deux matières actives, dans des solvants appropriés, et on applique ces solutions à raison d'environ 1 à 5 litres par hectare. A titre d'exemple, voici la composition d'une solution ULV selon l'invention:

- association des matières actives 200g/l
- solvant aromatique (coupe pétrolière) q.s.p. 1 litre

Comme formes de compositions solides, on peut citer les poudres pour poudrage (à teneur en association pouvant aller jusqu'à 100 %). et les granulés, notamment ceux obtenus par extrusion, par compactage, par imprégnation d'un support granulé, par granulation à partir d'une poudre (la teneur en association dans ces granulés étant entre 0,5 et 80 % pour ces derniers cas).

Les granulés "autodispersibles" (en langue anglaise "dry flowable" ; il s'agit plus exactement de granulés facilement dispersibles dans l'eau) ont une composition sensiblement voisine de celle des poudres mouillables. Ils peuvent être préparés par granulation de formulations décrites pour les poudres mouillables, soit par voie humide (mise en contact de l'association finement divisée avec la charge inerte et avec un peu d'eau, par exemple 1 à 20%, ou de solution aqueuse de dispersant ou de liant, puis séchage et tamisage), soit par voie

sèche (compactage puis broyage et tamisage).

A titre d'exemple, voici une formulation de granulé autodispersible

Exemple :

| | |
|---|---|
| - association | 800 g |
| - alkylnaphtalène sulfonate de sodium | 20 g |
| - méthylène bis naphtalène sulfonate de sodium | 80 g |
| - kaolin | 100 g |

Procédé de traitement général

L'invention concerne également un procédé pour contrôler les mauvaises herbes spécialement en un lieu où poussent des cultures ou sont destinés à pousser des cultures, notamment de riz ou de céréales, mais également en un lieu où ne pousse pas de cultures comme les cours d'usine, qui consiste à appliquer une dose efficace de produit (ou une composition le contenant), tel qu'il vient d'être décrit précédemment.

Lors de l'application à une zone cultivée, la dose d'application devrait être suffisante pour contrôler la croissance des adventices sans causer de dommages substantiels permanents aux dites cultures. Par dose efficace on entend justement dans ce contexte la dose qui permet d'obtenir ce résultat.

L'application peut-être effectuée en prélevée. On entend désigner par cette expression l'application au sol dans lequel les graines des mauvaises herbes sont présentes avant la levée des mauvaises herbes à la surface du sol.

L'application peut également être effectuée en post levée. On entend désigner par post levée l'application aux parties aériennes ou exposées des mauvaises herbes qui ont émergé de la surface du sol.

L'application en ce qui concerne la culture est en général effectuée, bien que cela ne soit pas obligatoire, en post levée de la culture.

Parmi les mauvaises herbes qui peuvent-être contrôlées par le dit produit on peut citer : Heteranthera callifolia, Paspalum paniculatum, Sphenoclea zeylanica, Eclipta prostrata, Veronica persica, Veronica hederifolia, Stellaria media, Lamium purpureum, Lamium amplexicaule, Aphanes arvensis, Galium aparine, Alopecurus myosuroides, Matricaria inodora, Matricaria matricarioides, Anthemis arvensis, Anthemis cotula, Papaver rhoeas, Poa annua, Apera spica venti, Phalaris paradoxa, Phalaris minor, Avena fatua, Lolium perenne, Lolium multiflorum, Bromus sterilis, Poa trivialis, Spergula arvensis, Cerastium holosteoides, Arenaria serpyllifolia, Silene vulgaris, Legousia hybrida, Geranium molle, Geranium dissectum, Erysimum cheiranthoides, Descurainoa sophia, Montia perfoliata, Anagallis arvensis, Myosotis arvensis, Chenopodium album, Polygonum aviculare, Polygonum convolvulus, Galeopsis tetrahit, Echinochloa crus-galli, Aeschynomene spp, Cassia spp, Monochoria vaginalis, Oenanthe spp, Sesbania spp.

Les quantités de produit contenant les matières actives de formule (I) et (II) peuvent varier selon la nature des mauvaises herbes, de la culture lorsque le produit est appliqué à la dite culture, de la composition utilisée, de l'époque de l'application ou des conditions climatiques.

En général compte tenu de ces facteurs on appliquera entre 50g et 4000g de produit par hectare mais il doit être bien compris que des doses plus basses ou plus élevées peuvent être utilisées selon le problème particulier à résoudre.

De préférence on appliquera entre 80g et 2000g de produit par hectare.

Procédé de traitement de cultures de riz

L'invention a encore pour objet un procédé de contrôle de mauvaises herbes en un lieu où pousse une culture de riz ou est destinée à pousser une culture de riz, par l'application d'une dose efficace d'un produit tel que défini ci-avant.

Parmi les mauvaises herbes qui peuvent être controlées par ledit procédé on peut citer notamment:
Heteranthera callifolia,

Selon une autre variante préférée, le procédé de controle de mauvaises herbes en un lieu où pousse une culture de riz ou est destinée à pousser une culture de riz est caractérisé en ce que l'on applique un produit contenant une association de N-(2,4-difluorophenyl) 2-(3-trifluoromethylphenoxy) nicotinamide et de 3,7-dichloroquinoline 8-carboxylic acide. En addition aux intervalles déja mentionnés dans la partie traitant du procédé en général, un intervalle de dose encore plus préféré consistera à appliquer entre 80g et 1000g/ha du produit.

Dans le cas des cultures de riz qui est une des applications préférées des produits selon l'invention ledit produit est particulièrement efficace contre les monocotylédones et plus particulièrement les adventices suivantes:

Heteranthera callifolia
Echinochloa crusgalli

Procédé de traitement de cultures de blé

L'invention a encore pour objet un procédé de contrôle de mauvaises herbes en un lieu où pousse une culture de blé ou est destinée à pousser une culture de blé, par l'application d'une dose efficace d'un produit tel que défini ci-avant.

Parmi les mauvaises herbes qui peuvent être controlées par ledit procédé on peut citer notamment:

Galium aparine.

Selon une autre variante préférée, le procédé de contrôle de mauvaises herbes en un lieu où pousse une culture de blé ou est destinée à pousser une culture de blé est caractérisé en ce que l'on applique un produit contenant une association de N-(2,4-difluorophenyl) 2-(3-trifluoromethylphenoxy) nicotinamide et de 3,7-dichloroquinoline 8-carboxylic acide. En addition aux intervalles déja mentionnés dans la partie traitant du procédé en général, un intervalle de dose encore plus préféré consistera à appliquer entre 80g et 1000g/ha du produit.

Dans le cas des cultures de blé qui est une des applications préférées des produits selon l'invention ledit produit est particulièrement efficace contre Galium aparine.

L'invention va maintenant être décrite par rapport à des exemples concrets de réalisation qui ne sont bien entendu donnés qu'à titre indicatif ne pouvant en aucune façon limiter la portée dela dite invention.

Afin de simplifier la méthode et parvenir à une meilleure base de comparaison on a choisi Heteranthera callifolia pour montrer l'activité du produit selon l'invention sur les cultures de riz et Galium aparine pour montrer l'activité du produit selon l'invention sur les cutures de blé.

Exemple de réalisation sur cultures de riz

Des touffes de riz semé et cultivé en pépinière sont repiquées dans des parcelles submergées de 15$m^2$ isolées par des digues. Les essais comprennent deux répétitions de chaque parcelle recevant une dose déterminée de produit et les plants sont situés aux points d'intersection de lignes transversales et longitudinales espacées respectivement l'une de l'autre de 25cm.

Le diflufenican est utilisé sous la forme d'un concentré émulsionnable à 75g/l de matière active et le 3,7-dichloroquinoline 8-carboxylic acide est utilisé sous la forme d'une suspension concentrée à raison de 500g/l de matière active.

On mélange les deux liquides dans un pulvérisateur de manière à obtenir les doses désirées des deux matières actives telles qu'elles seront indiquées ci-après en tenant compte du fait que la pulvérisation permet une application de 330 1/ha de liquide.

14 jours après repiquage, le mélange est appliqué selon des doses différentes de matières actives. Deux parcelles non traitées sont conservées comme témoins.

La lecture est éffectuée 54 jours aprés repiquage. Les résultats indiqués dans le tableau ci-aprés sont exprimés en pourcentage de mauvaises herbes détruites en se référant au nombre mesuré sur les parc elles non traitées. Aucune phytotoxicité n'est observée sur le riz.

| | | Diflufenican g/ha | | |
|---|---|---|---|---|
| | | 0 | 50 | 75 |
| BAS 514 | 0 | 0 | 0 | 10 |
| g/ha | 200 | 0 | 25 | 75 |
| | 250 | 0 | 66 | 78 |
| | 300 | 0 | 88 | 84 |

Exemple de réalisation sur cultures de blé

Dans des pots de 7 $cm^2$ de terre agricole légère, on sème trois graines de Galium aparine ou six graines de blé.

Le stade de traitement pour le blé est le stade deuxième feuille en formation. Le stade de traitement pour Galium aparine est le stade "cotylédons étalés, premier cercle de feuille vraie en développement".

Les pots sont traités par pulvérisation de bouillie en quantité correspondant à une dose volumique d'application de 2901/ha.

Le diflufenican est utilisé sous la forme d'une suspension concentrée à 500g/l de matière active et le 3,7-dichloroquinoline 8-carboxylic acid est utilisé sous la forme d'une suspension concentrée à raison de 500g/l de matière active.

On mélange, de manière à effectuer des pulvérisations de 18,8g/ha de diflufenican et 62,5g/ha de 3,7-dichloroquinoline 8-carboxylic acid.

Les résultats sont indiqués dans le tableau ci-dessous et exprimés en pourcentage de mauvaises herbes détruites en se référant au nombre mesuré sur les pots non traitées:

| | | diflufenican g/ha | |
|---|---|---|---|
| | | 0 | 18,8 |
| BAS 514 | 0 | 0 | 60 |
| g/ha | 62,5 | 90 | 100 (95) |

Le nombre entre parenthèses indique le résultat attendu selon S.R COLBY dans ""Weeds", Vol 15, N°1(1967), pages 2 à 22.

## Revendications

1. Produit contenant une association d'au moins une matière active qui est un dérivé de N-(phenyl ou benzyl substitué)-2-(3-substitué phénoxy) nicotinamide de formule (I)

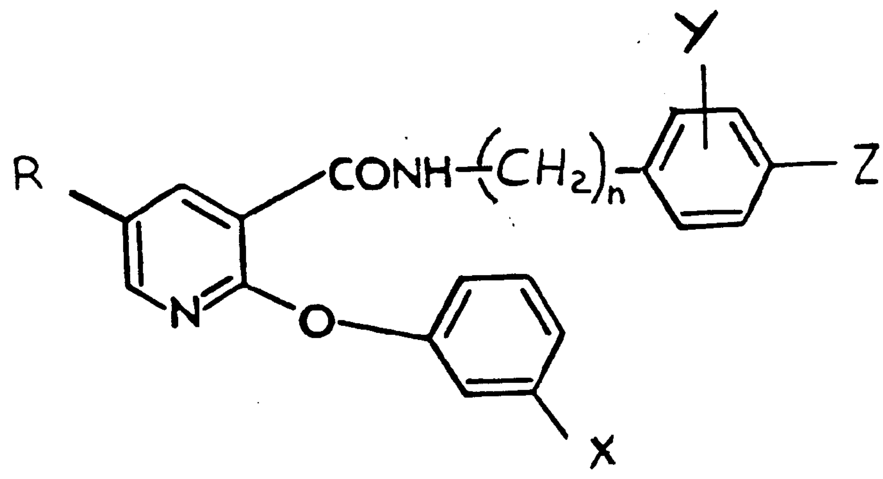

I

dans laquelle:
R est H ou $CH_3$,
X est un atome d'halogène (Cl, I, F, Br), ou un groupe $C_1$-$C_3$ alkyl ou trifluoromethyl ou carboethoxy, $Y_1$ est un atome d'hydrogène, un groupe $C_1$-$C_4$ alkyle,
$C_1$-$C_4$ haloalkyle, $C_1$-$C_4$ thio (haloalkyle),
$C_1$-$C_4$ alkoxy, nitro, cyano, un atome d'halogène (Cl, I, F, Br),
Z a l'une des significations de Y
n= 0, 1
et au moins une matière active qui est un dérivé 3,(5,6 ou 7)-dichloro 8-acyl quinoline de formule (II)

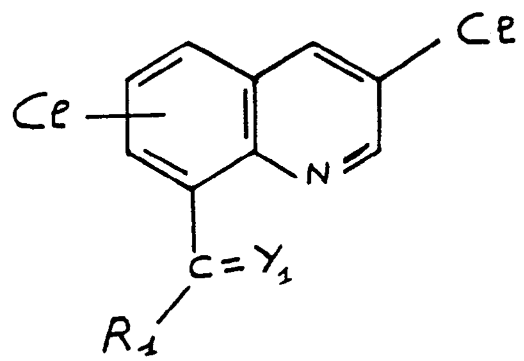

II

dans laquelle :
$Y_1$ est un atome d'oxygène, de souffre, un groupe NOH, 2H, 2Cl ou un groupe N-A-B dans lequel A est $CH_2$ ou une simple liaison covalente, B est phényl ou pyridyl éventuellement substitué par Cl, $NO_2$, $CH_3$, $CF_3$ ou $OCH_3$,
$R_1$ est un atome d'halogène, un groupe cyano, $NR_2R_3$ dans lequel $R_2$, $R_3$ sont indépendamment un atome d'hydrogène, un groupe $C_1$-$C_6$ alkyle, $C_1$-$C_6$ alcényle, $C_1$-$C_6$ hydroxyalkyle, formyle, cyclohexyle, phenyle ou pyridyle ou $R_2$, $R_3$ ensemble forment un groupe tetra ou pentaméthylene dans lequel un groupe $CH_2$ peut être remplacé par un atome d'oxygène, d'azote on N-$CH_3$, $R_1$ peut être en outre un groupe OM dans lequel M est un atome d'hydrogène, un métal du groupe 1 ou 2, un groupe $C_1$-$C_8$ alkyl, $H_2N$ $(R_2)(R_3)$ ou phényle éventuellement substitué par un atome d'halogène, un groupe $NO_2$, $C_1$-$C_4$ alkyl ou trihalométhyl ou $Y_1$ et $R_1$ ensemble peuvent représenter le groupement cyano.

2. Produit selon la revendication 1, caractérisé en ce que le rapport en poids de la matière active de formule (I) par rapport à la matière active de formule (II) compris entre 1/1000 et 100, de préférence 1/100 et 10.

3. Produit selon la revendication 1, caractérisé en ce que la matière active de formule (I) est le diflufenican ou N-(2,4-difluorophenyl)-2-(3-trifluoromethylphenoxy) nicotinamide.

4. Produit selon la revendication 1, caractérisé en ce que la matière active de formule (II) est l'acide 3,7-dichloroquinoleine 8-carboxylique.

5. Produit selon l'une des revendications 1 ou 2, caractérisé en ce qu'il contient l'association de diflufenican ou N-(2,4-difluorophenyl) 2-(3-trifluoromethylphenoxy) nicotinamide et l'acide 3,7-dichloroquinoleine 8-carboxylique.

6. Produit selon la revendication 5, caractérisée en ce que le rapport en poids du N-(2,4-difluorophenyl) 2-(3-trifluoromethylphenoxy) nicotinamide à l'acide 3,7-dichloroquinoleine 8-carboxylique est compris entre 1/50 et 2.

7. Produit selon l'une des revendications 1 à 6, pour une utilisation simultanée.

8. Utilisation du produit selon l'une des revendications 1 à 7, 14 à 16 à titre d'herbicide, notamment sous la forme d'une composition herbicide comprenant en outre un support inerte acceptable en agriculture et/ou un agent actif acceptable en agriculture.

9. Procédé de contrôle des mauvaises herbes notamment en un endroit où poussent des cultures, particuliérement des céréales ou du riz, caractérisé en qu'on applique audit endroit en pré ou post levée des mauvaises herbes une dose efficace d'un produit selon l'une des revendications 1 à 7.

10. Procédé de contrôle des mauvaises herbes selon la revendication 9, caractérisé en ce que le produit est appliqué à une dose comprise entre 50 et 4000g/ha, de préférence entre 80 et 2000g.ha.

11. Procédé de controle des mauvaises herbes selon l'une des revendications 9 à 11, caractérisée en ce que le produit est selon l'une des revendications 5 ou 6.

12. Procédé de controle des mauvaises herbes selon la revendication 11, caractérisé en ce que l'on applique le produit à un endroit où l'on cultive du riz ou du blé ou à un endroit où du riz ou du blé doit être cultivé.

13. Procédé de controle selon la revendication 12, caractérisé en ce que l'on applique le produit à raison de 80 à 1000g/ha.

14. Produit selon la revendication 1, caractérisé en ce que dans le composé de formule (I), R est l'atome d'hydrogène, X est l'atome d'halogène ou le radical trifluorométhyl, Y est en position 2- et représente l'atome d'hydrogène ou d'halogène, le radical haloalkyl, n=0, Z a l'une des significations de Y.

15. Produit selon la revendication 1 ou 14 caractérisé en ce que le composé de formule (I) est le N-(phényl)-2-(3-trifluorométhylphénoxy) nicotinamide.

16. Produit selon la revendication 1, caractérisé en ce que dans le composé de formule (II), le groupe -C(=Y)$R_1$ est le groupe -C(=O)OM.

## Patentansprüche

1. Produkt, enthaltend eine Kombination aus mindestens einem Wirkstoff, der ein Derivat ist von N-(Phenyl oder Benzyl, substituiert)-2-(3-phenoxy, substituiert)-nicotinamid der Formel (I)

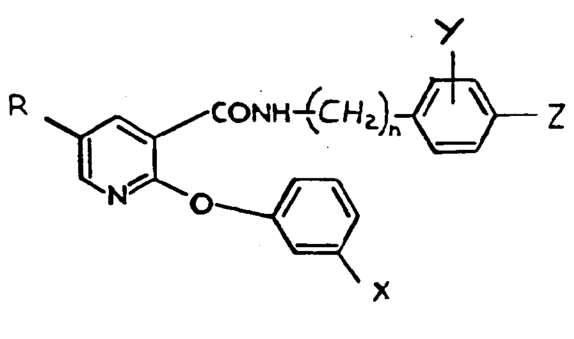

I

in der
R für H oder $CH_3$ steht,
X ein Halogenatom (Cl, I, F, Br) oder eine $C_1$-$C_3$-Alkyl- oder Trifluormethyl- oder Carbethoxygruppe ist,
Y für ein Wasserstoffatom, eine $C_1$-$C_4$-Alkyl-, $C_1$-$C_4$-Halogenalkyl-, $C_1$-$C_4$-Thio(halogenalkyl)-, $C_1$-$C_4$-Alkoxy-, Nitro-, Cyanogruppe oder für ein Halogenatom (Cl, 1, F, Br) steht,
Z eine der Bedeutungen von Y hat und
n für 0 oder 1 steht,
und mindestens einem Wirkstoff, der ein Derivat ist von 3,(5,6 oder 7)-Dichlor-8-acylchinolin der Formel (II)

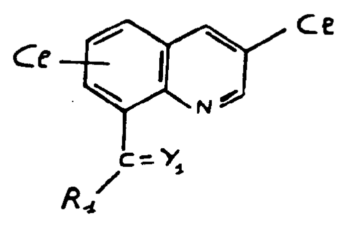

II

in der
$Y_1$ für ein Sauerstoff- oder Schwefelatom, eine Gruppe NOH, 2H, 2Cl oder eine Gruppe N-A-B steht, wobei A $CH_2$ oder eine einfache kovalente Bindung ist und B Phenyl oder Pyridyl, gegebenenfalls substituiert durch Cl, $NO_2$, $CH_3$, $CF_3$ oder $OCH_3$, bedeutet, $R_1$ ein Halogenatom, eine Cyanogruppe, $NR_2R_3$, wobei $R_2$ und $R_3$ unabhängig voneinander für ein Wasserstoffatom eine $C_1$-$C_6$-Alkyl-, $C_1$-$C_6$-Alkenyl-, $C_1$-$C_6$-Hydroxyalkyl-, Formyl-, Cyclohexyl-, Phenyl- oder Pyridylgruppe stehen, oder $R_2$ und $R_3$ zusammen eine Tetra- oder Pentamethylengruppe bilden, in der eine $CH_2$-Gruppe durch ein Sauerstoff- oder Stickstoffatom oder durch N-$CH_3$ ersetzt sein kann, bedeutet, $R_1$ weiterhin eine Gruppe OM sein kann, in der M ein Wasserstoffatom, ein Metall der Gruppen 1 oder 2, eine $C_1$-$C_8$-Alkylgruppe, $H_2N$ $(R_2)(R_3)$ oder eine Phenylgruppe, gegebenenfalls substituiert durch ein Halogenatom, oder $NO_2$, eine $C_1$-$C_4$-Alkyl- oder Trihalogenmethylgruppe ist oder $Y_1$ und $R_1$ zusammen die Cyanogruppe bilden können.

2. Produkt nach Anspruch 1, dadurch gekennzeichnet, daß das Gewichtsverhältnis von Wirkstoff der Formel (I), bezogen auf den Wirkstoff der Formel (II), im Bereich von 1:1000 und 100, vorzugsweise im Bereich von 1:100 und 10, liegt.

3. Produkt nach Anspruch 1, dadurch gekennzeichnet, daß der Wirkstoff der Formel (I) das Diflufenican oder N-(2,4-Difluorphenyl)-2-(3-trifluormethylphenoxy)nicotinamid ist.

4. Produkt nach Anspruch 1, dadurch gekennzeichnet, daß der Wirkstoff der Formel (II) die 3,7-Dichlorchinolin-8-carbonsäure ist.

5. Produkt nach einem der Ansprüche 1 oder 2, dadurch gekennzeichnet, daß es die Kombination von Diflufenican oder N-(2,4-Difluorphenyl)-2-(3-trifluormethylphenoxy)nicotinamid und 3,7-Dichlorchinolin-8-carbonsäure enthält.

6. Verfahren nach Anspruch 5, dadurch gekennzeichnet, daß das Gewichtsverhältnis von N-(2,4-Difluorphenyl)-2-(3-trifluormethylphenoxy)nicotinamid zu 3,7-Dichlorchinolin-8-carbonsäure 1:50 bis 2 beträgt.

7. Produkt nach einem der Ansprüche 1 bis 6 für eine gleichzeitige Anwendung.

8. Anwendung des Produktes nach einem der Ansprüche 1 bis 7 und 14 bis 16 als Herbizid, vor allem in Form eines herbiziden Mittels, das zusätzlich einen für die Landwirtschaft annehmbaren inerten Träger und/ oder einen für die Landwirtschaft annehmbaren Wirkstoff enthält.

9. Verfahren zum Bekämpfen von Unkräutern, vor allem an einem Standort von Kulturpflanzen, insbesondere Getreide oder Reis, dadurch gekennzeichnet, daß man auf diesem Ort vor oder nach dem Auflaufen der Unkräuter eine wirksame Dosis eines Produktes nach einem der Ansprüche 1 bis 7 aufbringt.

10. Verfahren zum Bekämpfen von Unkräutern nach Anspruch 9, dadurch gekennzeichnet, daß das Produkt

in einer Dosis im Bereich von 50 bis 4000 g/ha, vorzugsweise von 80 bis 2000 g/ha aufgebracht wird.

**11.** Verfahren zum Bekämpfen von Unkräutern nach einem der Ansprüche 9 bis 10, dadurch gekennzeichnet, daß das Produkt einem der Ansprüche 5 oder 6 entspricht.

**12.** Verfahren zum Bekämpfen von Unkräutern nach Anspruch 11, dadurch gekennzeichnet, daß man das Produkt auf einen Ort aufbringt, auf dem Reis oder Weizen kultiviert wird, oder auf einem Ort, auf dem Reis oder Weizen kultiviert werden sollen.

**13.** Verfahren zum Bekämpfen gemäß Anspruch 12, dadurch gekennzeichnet, daß man das Produkt in einer Menge von 80 bis 1000 g/ha aufbringt.

**14.** Produkt nach Anspruch 1, dadurch gekennzeichnet, daß in der Formel (I) R ein Wasserstoffatom, X ein Halogenatom oder die Trifluormethylgruppe bedeutet, Y in 2-Stellung steht und ein Wasserstoff- oder Halogenatom oder eine Halogenalkylgruppe bedeutet, n = 0 und Z eine der Bedeutungen von Y hat.

**15.** Produkt nach den Ansprüchen 1 oder 14, dadurch gekennzeichnet, daß die Verbindung der Formel (I) das N-(Phenyl)-2-(3-trifluormethylphenoxynicotinamid ist.

**16.** Verfahren nach Anspruch 1, dadurch gekennzeichnet, daß in der Verbindung der Formel (II) die Gruppe -C(=Y)$R_1$ die Gruppe -C(=O)OM ist.

## Claims

**1.** Product containing a combination of at least one active substance which is an N-(substituted phenyl or benzyl)-2-(3-substituted phenoxy)nicotinamide derivative of formula (I)

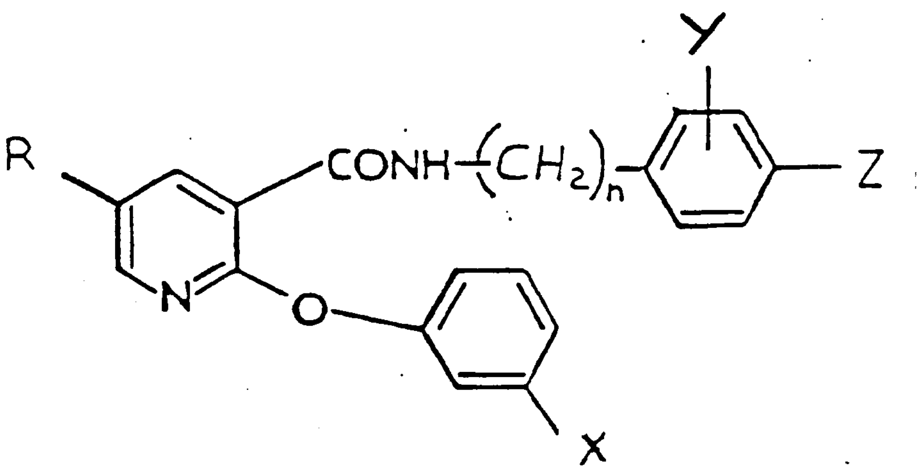

I

in which:
R is H or $CH_3$,
X is a halogen atom (Cl, I, F, Br) or a $C_1$-$C_3$ alkyl or trifluoromethyl or carbethoxy group,
Y is a hydrogen atom, a $C_1$-$C_4$ alkyl, $C_1$-$C_4$ haloalkyl, $C_1$-$C_4$ thio(haloalkyl), $C_1$-$C_4$ alkoxy, nitro or cyano group or a halogen atom (Cl, I, F, Br),
Z has one of the meanings of Y, and
n = 0 or 1,
and at least one active substance which is a 3,(5, 6 or 7)-dichloro-8-acylquinoline derivative of formula (II)

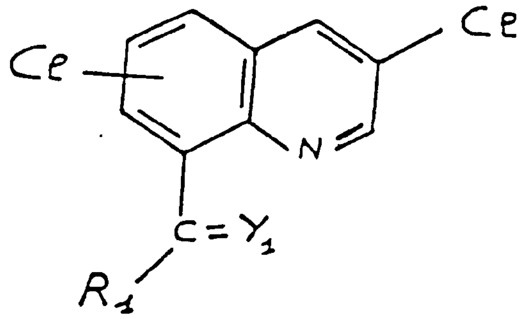

II

in which:
$Y_1$ is an oxygen or sulphur atom, an NOH group, 2H, 2Cl or a group N-A-B in which A is $CH_2$ or a single covalent bond and B is phenyl or pyridyl optionally substituted with Cl, $NO_2$, $CH_3$, $CF_3$ or $OCH_3$, and $R_1$ is a halogen atom, a cyano group or a group $NR_2R_3$ in which $R_2$ and $R_3$ are, independently, a hydrogen atom or a $C_1$-$C_6$ alkyl, $C_1$-$C_6$ alkenyl, $C_1$-$C_6$ hydroxyalkyl, formyl, cyclohexyl, phenyl or pyridyl group, or $R_2$ and $R_3$ together form a tetra- or pentamethylene group in which a $CH_2$ group can be replaced by an oxygen or nitrogen atom or N-$CH_3$; $R_1$ can, in addition, be a group OM in which M is a hydrogen atom, a group 1 or group 2 metal, a $C_1$-$C_8$ alkyl group, a group $H_2N(R_2)(R_3)$ or a phenyl group optionally substituted with a halogen atom or an $NO_2$, $C_1$-$C_4$ alkyl or trihalomethyl group, or Y and $R_1$ together can denote a cyano group.

2. Product according to Claim 1, in which the ratio by weight of the active substance of formula (I) to the active substance of formula (II) is between 1:1000 and 100, and preferably 1:100 and 10.

3. Product according to Claim 1, in which the active substance of formula (I) is diflufenican or N-(2,4-difluorophenyl)-2-(3-trifluoromethylphenoxy)nicotinamide.

4. Product according to Claim 1, in which the active substance of formula (II) is 3,7-dichloro-8-quinolinecarboxylic acid.

5. Product according to one of Claims 1 and 2, which contains a combination of diflufenican or N-(2,4-difluorophenyl)-2-(3-trifluoromethylphenoxy)nicotinamide and 3,7-dichloro-8-quinolinecarboxylic acid.

6. Product according to Claim 5, in which the ratio by weight of N-(2,4-difluorophenyl)-2-(3-trifluoromethylphenoxy)nicotinamide to 3,7-dichloro-8-quinolinecarboxylic acid is between 1:50 and 2.

7. Product according to one of Claims 1 to 6, for simultaneous use.

8. Use of the product according to one of Claims 1 to 7 and 14 to 16 by way of a herbicide, in particular in the form of a herbicidal composition comprising, in addition, an agriculturally acceptable inert vehicle and/or an agriculturally acceptable active agent.

9. Process for controlling weeds, in particular in a place where crops, especially cereal or rice crops, are growing, characterised in that an effective dose of a product according to one of Claims 1 to 7 is applied at the said place pre- or post-emergence of the weeds.

10. Process for controlling weeds according to Claim 9, characterised in that the product is applied at a dose of between 50 and 4000 g/ha, and preferably between 80 and 2000 g/ha.

11. Process for controlling weeds according to one of Claims 9 to 11, characterised in that the product is according to one of Claims 5 and 6.

12. Process for controlling weeds according to Claim 11, characterised in that the product is applied at a place where rice or wheat is cultivated or at a place where rice or wheat is to be cultivated.

13. Control process according to Claim 12, characterised in that the product is applied on the basis of 80 to 1000 g/ha.

**14.** Product according to Claim 1, characterised in that in the compound of formula (I) R is the hydrogen atom, X is the halogen atom or the trifluoromethyl radical, Y is in position 2 and represents the hydrogen or halogen atom or the haloalkyl radical, n = 0 and Z has one of the meanings of Y.

**15.** Product according to Claim 1 or 14, characterised in that the compound of formula (I) is N-phenyl-2-(3-trifluoromethylphenoxy)nicotinamide.

**16.** Product according to Claim 1, characterised in that in the compound of formula (II) the -C(=Y)$R_1$ is the -C(=O)OM group.